# EUROPEAN PATENT APPLICATION

(11) **EP 4 496 084 A1**
(43) Date of publication of application: **22.01.2025**
(21) Application number: 22948220.3
(22) Date of filing: 27.06.2022
(51) Int. Cl.: H01M 50/172, H01M 50/242, H01M 50/296, H01M 50/543

(54) **BATTERY AND ELECTRIC APPARATUS**

(71) Applicant: Contemporary Amperex Technology (Hong Kong) Limited, Central, Central And Western District (HK)
(72) Inventor: WANG, Peng, Ningde, Fujian 352100 (CN); CHEN, Xingdi, Ningde, Fujian 352100 (CN); LONG, Chao, Ningde, Fujian 352100 (CN)
(74) Representative: Thoma, Michael
(86) International application number: PCT/CN2022/101440
(87) International publication number: WO 2024/000096

(57) **Abstract**

Embodiments of the present application provide a battery and a power consuming device. The battery includes a case, a battery cell, a connection plate and a connector. The case has a top and a bottom opposite to each other in a first direction, and the bottom is provided with an opening. The battery cell is arranged in the case. The connection plate is configured to protrude in a second direction from one side of the case, and to form a receiving portion with the bottom in the first direction, the first direction intersecting the second direction. The connector is arranged in the receiving portion, is connected to the connection plate, and is electrically connected to the battery cell. According to the embodiments of the present application, the energy density and the safety of the battery can be improved.

## Description

### Technical Field

The present application relates to the technical field of batteries, and in particular to a battery and a power consuming device.

### Background Art

In recent years, the emergence of new energy vehicles has played a huge role in promoting social development and environmental protection. Traction batteries, which are rechargeable batteries, are the power source of new energy vehicles and are widely used in the field of new energy vehicles.

In the development of battery technology, how to improve the safety and the energy density of batteries is one of important research directions in the battery technology.

### Summary of the Invention

Embodiments of the present application provide a battery and a power consuming device, which can improve the energy density and the safety of the battery.

In a first aspect, the embodiments of the present application provide a battery, including a case, a connection plate, a battery cell and a connector. The case has a top and a bottom opposite to each other in a first direction, and the bottom is provided with an opening. The battery cell is arranged in the case. The connection plate is configured to protrude in a second direction from one side of the case, and to form a receiving portion with the bottom in the first direction, the first direction intersecting the second direction. The connector is arranged in the receiving portion and connected to the connection plate, and the connector is electrically connected to the battery cell.

In the above technical solution, the connection plate is arranged on an outer side of the case and forms the receiving portion, and the connector is arranged in the receiving portion, so as to protect the connector and prevent the connector from being damaged by external impact in the inverted battery, thereby improving the safety of the battery.

In some embodiments, the connector does not extend beyond an extension plane of the bottom in the first direction, so that the connector is completely arranged in the receiving portion, so as to better protect the connector.

In some embodiments, the case includes side plates distributed along a periphery of the opening, the side plates are connected to each other to form a frame structure, and the connection plate is integrally formed with the side plates.

In the above technical solution, the integral formation of the connection plate with the side plates can increase the stress strength of the connection plate.

In some embodiments, a surface of the connection plate facing the receiving portion is a first protective surface, a surface of the side plate facing the receiving portion is a second protective surface, and the connector is connected to the first protective surface, and is arranged spaced apart from the second protective surface.

In the above technical solution, the connector is arranged spaced apart from the second protective surface, so as to reduce and buffer the impact force in the second direction.

In some embodiments, in the first direction, a thickness D1 of the connection plate, an extension height D2 of the connector and an extension height D3 of the side plate satisfy: D1 + D2 ≤ D3.

In the above technical solution, the connector can be completely located in the receiving portion, reducing the possibility of damage in a collision and improving the safety of the battery.

In some embodiments, the case further includes a cover body arranged at the opening, and the cover body is fixedly connected to the side plates.

In some embodiments, the cover body is detachably connected to the side plates, so as to facilitate the assembly of the battery.

In some embodiments, the case includes a support plate arranged at the top, and the battery cell is connected to the support plate.

In the above technical solution, the rigidity of the top of the battery is increased by means of the support plate, and the reliability of the battery can thus be improved.

In some embodiments, a side surface of the connection plate facing away from the receiving portion is located on the same horizontal plane as a side surface of the support plate facing away from the opening.

In above technical solution, the side surface of connection plate and the side surface of the support plate are located on the same horizontal plane, so that the connection plate and the support plate can be arranged on the same plane of an external apparatus when being mounted to the external apparatus, to reduce the assembly difficulty.

In some embodiments, the support plate is internally provided with a channel configured to receive a heat exchange medium to adjust the temperature of the battery cell.

In the above technical solution, the temperature of the battery cell can be adjusted by providing the channel, thereby prolonging the service life of the battery.

In some embodiments, a thermal management component is further provided between the battery cell and the support plate, and is configured to adjust the temperature of the battery cell, so as to prolong the service life of the battery.

In some embodiments, electrode terminals of the battery cell are arranged to face the opening, and an end face of the battery cell opposite to the electrode terminals is fixed to the support plate.

In the above solution, the arrangement of the electrode terminals facing the opening can improve the energy density of the battery cell.

In some embodiments, a pressure relief mechanism and the electrode terminals of the battery cell are jointly arranged to face the opening.

In the above solution, the arrangement of the pressure relief mechanism facing the opening can make the pressure relief mechanism erupt toward the cover body during thermal runaway, thereby improving the safety of the battery.

In a second aspect, the embodiments of the present application provide a power consuming device, including a battery cell according to any one of the embodiments in the first aspect, the battery cell being configured to supply electric energy.

### Brief Description of the Drawings

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic structural view of a vehicle according to some embodiments of the present application;
FIG. 2 is a schematic structural view of a battery according to some embodiments of the present application in an assembled state;
FIG. 3 is a schematic exploded view of a battery according to some embodiments of the present application;
FIG. 4 is a schematic structural view of a part of a battery according to some embodiments of the present application;
FIG. 5 is a schematic structural view of a cover body of a battery according to some embodiments of the present application;
FIG. 6 is a schematic cross-sectional view of the battery shown in FIG. 2;
FIG. 7 is a schematic structural view of a collision test device for performing a collision test on a battery according to some embodiments of the present application;
FIG. 8 is a schematic exploded view of a battery according to some other embodiments of the present application;
FIG. 9 is a schematic structural view of a carrying assembly of a battery according to some other embodiments of the present application;
FIG. 10 is a schematic cross-sectional view of the battery shown in FIG. 8;
FIG. 11 is a schematic enlarged view of FIG. 10 at circle B; and
FIG. 12 is a schematic structural view of a battery cell of a battery according to some embodiments of the present application.

The reference signs in Detailed Description are as follows:
1000. Vehicle; 100. Battery; 200. Controller; 300. Motor; 1. Case; 101. Top; 102. Bottom; 103. Opening; 11. Support plate; 12. Side plate; 13. Cover body; 131: Main body portion; 132. Matching portion; 133. Bolt; 2. Battery cell; 21. End cap; 211. Electrode terminal; 212. Pressure relief mechanism; 22. Housing; 23. Electrode assembly; 24. Bus component; 3. Connection plate; 31. Receiving portion; 311. First protective surface; 312. Second protective surface; 4. Connector; 5. Carrying assembly; 51. Main plate; 52. Carrying strip; 521. Notch;
A. Collision test device; A1. Impact head; A2. Launching device; A3. Rack;
X. First direction; Y. Second direction.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, the phrase "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated device are merely illustrative and should not be construed to limit the present application in any way.

The phrase "plurality of" appearing in the present application means two or more (including two).

The term "parallel" in the present application includes not only the absolutely parallel situation, but also the roughly parallel situation that is generally recognized in engineering. Moreover, the term "perpendicular" not only includes the absolutely perpendicular situation, but also includes the roughly perpendicular situation that is generally recognized in engineering.

The battery cell may be a lithium-ion battery cell, a lithium-sulfur battery cell, a sodium-lithium-ion battery cell, a sodium-ion battery cell, a magnesium-ion battery cell, etc., which will not be limited in the embodiments of the present application.

A battery refers to a single physical module including a plurality of battery cells to provide a higher voltage and capacity. The battery may generally include a case for packaging one or more battery cells. The case can prevent liquid or other foreign matter from affecting charging or discharging of the battery cell(s). In the battery, a plurality of battery cells may be connected in series, in parallel or in series-parallel. The series-parallel connection means that some of the plurality of battery cells are connected in series and some are connected in parallel. The plurality of battery cells may be directly connected to each other in series or in parallel or in series-parallel, and then the plurality of battery cells as a whole are received in the case. Of course, the battery may also be received in the case as a whole that is formed by firstly connecting a plurality of battery cells in series or in parallel or in series-parallel to form a plurality of batteries, and then connecting the plurality of batteries in series or in parallel or in series-parallel.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for the traction batteries is also expanding.

In some cases, the opening of the case of the battery usually faces upward in the vertical direction, the battery cell is fixed to the bottom of the battery, and electrode terminals face a cover body which covers the opening of the case. Moreover, the connector of the battery protrudes from the case on one side of the case in a horizontal direction.

However, in the battery configured as above, the inventors have noticed that when the battery is arranged in a power consuming device, the bottom is bonded to the power consuming device, and the battery cell is fixed to the bottom of the battery, so that the top of the battery that is more vulnerable to collisions has a poor rigidity, and the battery is likely to be damaged, resulting in poor safety. Moreover, the connector protruding from one side of the case not only occupies the space for placing the battery in the power consuming device, but is also prone to damage in a collision, causing safety accidents.

In view of this, the embodiments of the present application provide a battery, in which a case includes a top and a bottom opposite to each other in a first direction, and a battery cell is arranged at the top, so that the rigidity of the top of the battery and the energy density of the battery can be increased. Moreover, by jointly arranging a pressure relief mechanism and electrode terminals to face the opening together, the pressure relief mechanism erupts downward in the case of thermal runaway of the battery, so that the safety of the battery can be improved. In addition, the connection plate and the bottom form the receiving portion in the first direction, and the connector is arranged in the receiving portion, so that it is possible to protect the connector and reduce the damage to the connector in a collision.

The technical solutions described in the embodiments of the present application are applicable to batteries and power consuming devices powered by the batteries.

The power consuming device may be a vehicle, a mobile phone, a portable apparatus, a notebook computer, a ship, a spacecraft, an electric toy, an electric tool, etc. The vehicle may be a fuel vehicle, a gas vehicle or a new energy vehicle. The new energy vehicle may be a battery electric vehicle, a hybrid vehicle, an extended range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The foregoing power consuming devices are not specifically limited in the embodiments of the present application.

It should be understood that the technical solutions described in the embodiments of the present application are not merely applicable to the power consuming devices described above. However, for the sake of brevity, the following embodiments will be described by taking an electric vehicle 1000 as an example.

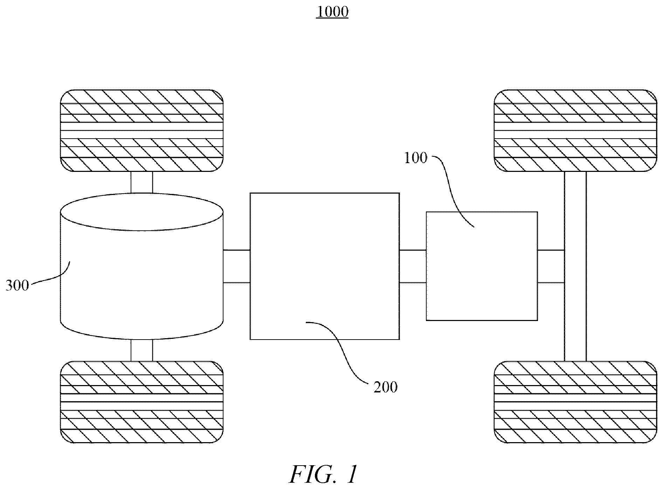

FIG. 1 is a schematic structural view of a vehicle 1000 provided in some embodiments of the present application. As shown in FIG. 1, the vehicle 1000 may be a fuel vehicle, a gas vehicle or a new energy vehicle, and the new energy vehicle may be a battery electric vehicle, a hybrid electric vehicle, an extended range vehicle, etc. A battery 100 is provided inside the vehicle 1000, and the battery 100 may be provided at the bottom, the front or the back of the vehicle 1000.

The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000. In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

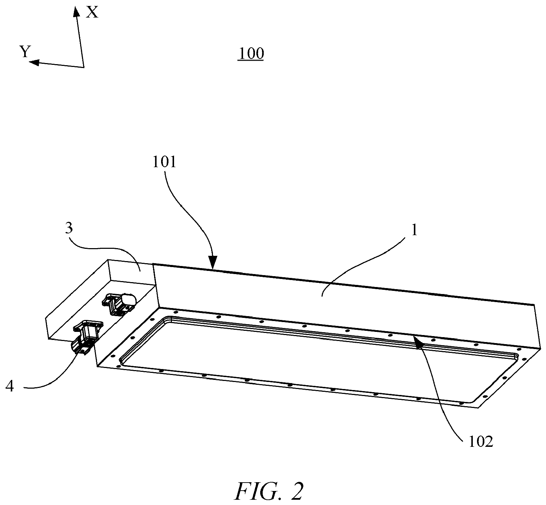

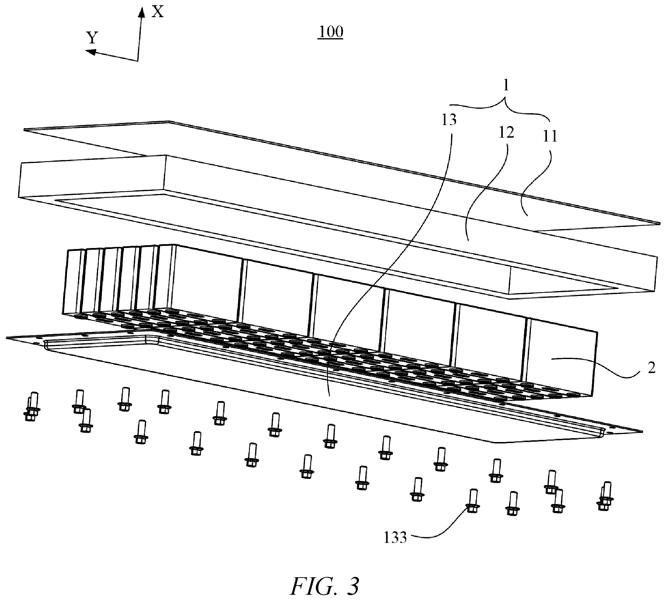

FIG. 2 is a schematic structural view of a battery 100 according to some embodiments of the present application in an assembled state. FIG. 3 is a schematic exploded view of a battery 100 according to some embodiments of the present application. In FIG. 3, a connection plate 3 and a connector 4 of the battery 100 are omitted. As shown in FIGS. 2 and 3, according to some embodiments of the present application, a battery 100 includes a case 1, a battery cell 2, a connection plate 3 and a connector 4. The case 1 has a top 101 and a bottom 102 opposite to each other in a first direction X. The bottom 102 is provided with an opening 103. The battery cell 2 is arranged in the case 1. The connection plate 3 is configured to protrude in a second direction Y from one side of the case 1, and to form a receiving portion 31 with the bottom 102 in the first direction X. The connector 4 is arranged in the receiving portion 31, connected to the connection plate 3, and is electrically connected to the battery cell 2.

The connection plate 3 is a boss protruding in a second direction Y from one side of the case 1, and there is a difference in thickness between the boss and the bottom 102 in the first direction X. The receiving portion 31 is a space created by this thickness difference and formed by a connection face between the connection plate 3 and the case 1, for allowing the connector 4 to be arranged therein. The arrangement of the connector 4 in the receiving portion 31 can protect the connector 4 and reduce the impact force on the connector 4 in a collision.

The battery 100 is electrically connected to an external device via the connector 4. Therefore, the connector 4 needs to be electrically connected to the battery cell 2, which means that the connector 4 is electrically connected to the battery cell 2 by means of a current path provided inside the connection plate 3, so as to obtain the electric energy of the battery cell 2 in the case 1, and supply power for the external power consuming device.

The intersecting of the first direction X and the second direction Y means that the connection plate 3 may be at some angle with the extension direction of the case 1, but cannot be parallel to the case 1, facilitating the arrangement of the connector 4 in the receiving portion 31 between the connection plate 3 and the case 1. In the embodiments of the present application, for the convenience of description, the first direction X is taken as the vertical direction, the second direction Y is taken as the horizontal direction, and the first direction X and the second direction Y are perpendicular to each other. Optionally, the first direction X and the second direction Y may be other directions, and may not be perpendicular to each other.

In some embodiments of the present application, the connector 4 does not extend beyond an extension plane of the bottom 102 in the first direction X.

The connector does not extend beyond the bottom 102 in the first direction X, so that the connector 4 is completely located in the receiving portion 31, avoiding contact with an external device located in a circumferential direction of the battery 100, and reducing influence on the connector 4 during the electrical connection between the battery cell 2 and the external device.

In some embodiments of the present application, the case 1 includes side plates 12 distributed along a periphery of the opening 103, the side plates 12 are connected to each other to form a frame structure, and the connection plate 3 is integrally formed with the side plates 12.

In the case 1, the side plates 12 and the support plate 11 are arranged in sequence from top to bottom in the first direction X. The side plates 12 are plate bodies extending in the first direction X, and are arranged around the support plate 11, and the opening 103 is formed at the bottom 102, so that the interior of the case 1 has a space capable of receiving the battery cell 2. Making the connection plate 3 protrude from one side of the side plate 12 and integrally formed with the side plates 12 can increase the stress strength of the connection plate 3.

Optionally, the connection plate 3 may not be integrally formed with the side plates 12, but is fixedly connected to the side plates 12 by at least one of welding, bonding, fastening or flow drill screwing processes. Similarly, the connection plate 3 and the support plate 11, or the side plates 12 and the support plate 11 may also be integrally formed with each other, or fixedly connected to each other in the above manner, which will not be limited in the embodiments of the present application.

In some embodiments of the present application, a surface of the connection plate 3 facing the receiving portion 31 is a first protective surface 311, a surface of the side plate 12 facing the receiving portion 31 is a second protective surface 312, and the connector 4 is connected to the first protective surface 311, and is arranged spaced apart from the second protective surface 312 connector 4.

That is, the first protective surface 311 is a side surface of the connection plate 3 facing away from the top 101, the second protective surface 312 is a side surface of the side plate 12 of the case 1 close to the connection plate 3, and the first protective surface 311 is connected to the second protective surface 312 to form the receiving portion 31. The connector 4 extends from the first protective surface 311 in the first direction X, so as to overhang the receiving portion 31 and not contact the second protective surface 312, to reduce the impact that the connection plate 3 may receive in a collision.

Optionally, the first protective surface 311 and the second protective surface 312 may be perpendicularly connected to each other, that is, the first protective surface 311 extends in the second direction Y, and the second protective surface 312 extends in the first direction X, so that the first protective surface 311 and the second protective surface 312 are perpendicular to each other, thereby increasing the space for mounting the connector 4 and maximizing the receiving portion 31.

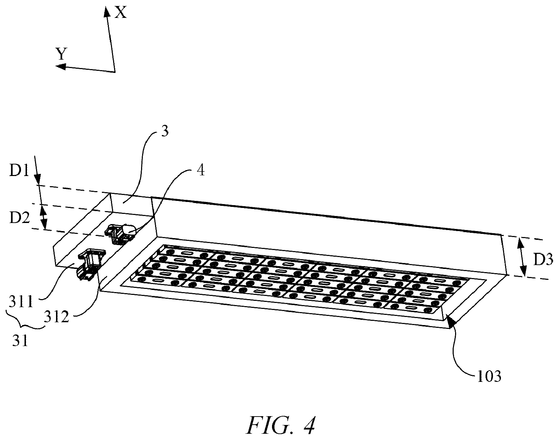

FIG. 4 is a schematic structural view of a part of a battery 100 according to some embodiments of the present application. As shown in FIG. 4, in the first direction X, a thickness of the connection plate 3 is a first dimension D1, an extension height of the connector 4 is a second dimension D2, and an extension height of the side plate 12 is a third dimension D3. The sum of the first dimension D1 and the second dimension D2 is not greater than the third dimension D3, that is, D1 + D2 ≤ D3, so that the connector 4 can be completely located in the receiving portion 31, thereby protecting the connector 4.

In some optional embodiments, the connector 4 may extend in the first direction X, and face the extension plane where the bottom 102 is located. The use of such a structure can facilitate the electrical connection between the connector 4 and the external device, and the connector 4 has a better force bearing performance compared with the arrangement of the connector 4 in the horizontal direction.

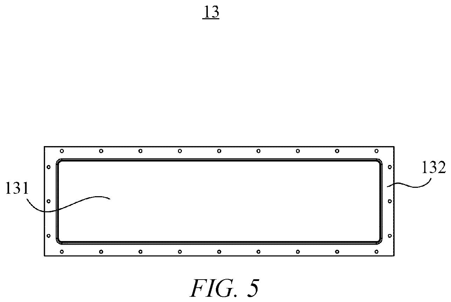

FIG. 5 is a schematic structural view of a cover body 13 of a battery 100 according to some embodiments of the present application. As shown in FIG. 5, in some embodiments of the present application, the case 1 further includes a cover body 13 arranged at the opening 103, and the cover body 13 is connected to the side plates 12. The cover body 13 covers the opening 103, so that the case 1 has a relatively sealed structure.

The cover body 13 includes a main body portion 131 and a matching portion 132. The matching portion 132 is arranged in a circumferential direction of the main body portion 131 and matches the side plates 12. That is, the main body portion 131 covers the opening 103 formed by the side plates 12, and the matching portion 132 is fixed to the side plates 12 to connect the cover body 13 to the side plates 12.

In the first direction X, the main body portion 131 protrudes from the extension plane of the bottom 102 relative to the matching portion 132. There is a relatively larger distance between the battery cell 2 arranged in the case 1 and the cover body 13, so as to make room for the bus component or other components between the electrode terminals 211 of the battery cell 2, and to prevent the cover body 13 from being too close to the electrode terminals 211 of the battery cell 2. It should be understood that the protruding distance of the main body portion 131 relative to the matching portion 132 should be selected based on the energy density of the battery 100, and should not be too large to increase the volume of the battery 100 while reducing the energy density of the battery 100.

In some embodiments of the present application, the cover body 13 is detachably connected to the side plates 12.

The detachable connection between the cover body 13 and the side plates 12 can facilitate the assembly of the battery 100. Illustratively, in the embodiments of the present application, the cover body 13 is detachably connected to the side plates 12 via bolts 133, or the cover body 13 may be fixedly connected to the side plates 12 in other ways, which will not be limited in the embodiments of the present application.

In some embodiments of the present application, the case 1 includes a support plate 11 arranged at the top 101, and the battery cell 2 is connected to the support plate 11.

The support plate 11 is a plate body extending in the second direction Y at the top 101 of the case 1. The support plate 11 can increase the rigidity of the top of the battery 100 and reduce the possibility of damage to the battery 100 in a collision. By the battery cell 2 being connected to the support plate 11, it is meant that the battery cell 2 is arranged at the top 101 of the battery 100, so that it is possible to increase the rigidity of the top 101 of the battery 100, reduce the possibility of damage to the battery 100 in a collision, and improve the safety of the battery 100.

Optionally, the battery cell 2 can be directly bonded and fixed to the support plate 11, or may be fixed to the support plate 11 in other ways, such as bolting, which will not be limited in the embodiments of the present application.

In some embodiments of the present application, a side surface of the connection plate 3 facing away from the receiving portion 31 is located on the same horizontal plane as a side surface of the support plate 11 facing away from the opening 103.

That is, the side surface of the connection plate 3 and the side surface of the support plate 11 that are located at the top 101 of the case 11 are located on the same plane, and when the battery 100 is fixed to an external device, the connection plate 3 and the support plate 11 can be fixed to the same surface of the external device. Moreover, the fact that the side surface of the connection plate 3 and the side surface of the support plate 11 are located on the same horizontal plane can increase the stress strength of the two, so that the battery 100 has a better bearing capacity.

The connection plate 3 protrudes toward the extension plane of the bottom 102 in the first direction X, that is, the connection plate 3 has a certain thickness in the first direction X. In a collision, the face of the connection plate 3 facing away from the case 1 may bear a certain impact force, the connection plate 3 having a certain thickness can increase the rigidity of the connection plate 3 and provide better protection for the connector 4.

In some embodiments of the present application, a channel (not shown in the figures) is buried inside the support plate 11, and is configured to receive a heat exchange medium to adjust the temperature of the battery cell.

Since the battery cell 2 is arranged at the support plate 11, and the bottom of the battery cell 2 is in contact with the support plate 11, for the consideration of the performance of the battery 100, burying a channel, through which a gas or liquid passes, inside the support plate 11 can have a temperature regulation effect on the battery 100 during operating of the battery 100, thereby prolonging the service life and improving the usability of the battery 100.

In some embodiments of the present application, a channel may be provided between the battery cell 2 and the support plate 11 as a thermal management component, or be formed as any other component that can function to regulate the temperature of the battery cell 2, which will not be limited in the embodiments of the present application here.

In some embodiments of the present application, the electrode terminals 211 of the battery cell 2 are arranged to face the opening 103, and an end face of the battery cell 2 opposite to the electrode terminals 211 is fixed to the support plate 11.

In the first direction X, the electrode terminals 211 of the battery cell 2 face the opening 103 of the bottom 102 of the case 1, that is, the structure of the battery 100 is inverted in the vertical direction. With such a structure, during practical application, the battery 100 is fixed to the interior of an external device, such as a vehicle 1000, via the top 101 of the case 1. The arrangement of the battery cell 2 at the top 101 of the battery 100 can increase the rigidity of the top 101 of the battery 100, reduce the possibility of damage to the battery 100 in a collision, and improve the safety of the battery 100. Moreover, the electrode terminals 211 of the battery cell 2 face the opening 103, and the face of the battery cell 2 opposite to the electrode terminals 211 is fixedly connected to the top 101 of the case 1, so that the battery 100 can reserve less space for placing the battery cell 2, to increase the energy density of the battery 100 and also enable the battery cell 2 to be better combined with the case 1.

In some embodiments of the present application, a pressure relief mechanism 212 and the electrode terminals 211 of the battery cell 2 are jointly arranged to face the opening 103.

The pressure relief mechanism 212 refers to an element or component that is actuated when an internal pressure of the battery cell 2 reaches a predetermined threshold so as to release the internal pressure. That is, when the internal pressure of the battery cell 2 reaches a predetermined threshold, the pressure relief mechanism 212 generates an action or is activated into a certain state, such that the internal pressure of the battery cell 2 can be released. The action generated by the pressure relief mechanism 212 may include, but not limited to, at least a part of the pressure relief mechanism 212 being fractured, broken, torn or opened, so as to form an opening 103, a channel or the like for releasing the internal pressure. In this case, high-temperature and high-pressure substances inside the battery cell 2 are discharged outwards from an actuated position as emissions. In this way, the pressure in the battery cell 2 can be released at a controllable pressure, thereby avoiding potential, more serious accidents. The pressure relief mechanism 212 may take the form of a pressure relief mechanism, a gas valve, a pressure relief valve, a safety valve or the like, and may specifically use a pressure sensitive element or structure.

Where the pressure relief mechanism 212 faces the opening 103, when the battery cell 2 is subjected to thermal runaway, the pressure relief mechanism 212 erupts toward the cover body 13. In this case, the structure in which the main body portion 131 protrudes from the extension plane of the bottom 102 relative to the matching portion 132 enables the pressure relief mechanism 212 to have a larger eruption space. Moreover, the pressure relief mechanism 212 erupts toward the bottom 102, that is, the eruption direction is directed toward the ground, so that the safety of the battery 100 can be improved.

In the embodiments of the present application, the electrode terminals 211 are arranged on two sides of the pressure relief mechanism 212. Optionally, the pressure relief mechanism 212 may have other positional relationships with the electrode terminals 211.

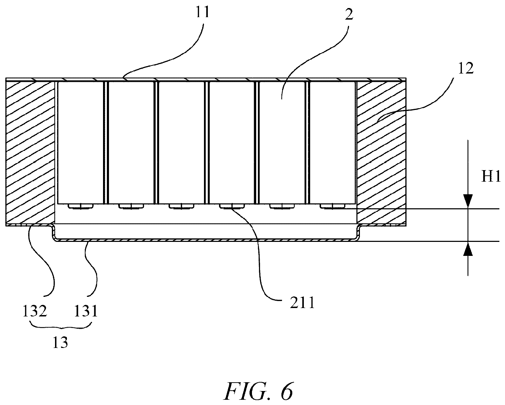

FIG. 6 is a schematic cross-sectional view of the battery shown in FIG. 2. As shown in FIG. 6, there is a first distance H1 between the face of the battery cell 2 facing the bottom 102 and the cover body 13.

Where the main body portion 131 of the cover body 13 protrudes from the extension plane of the bottom 102 relative to the matching portion 132, the first distance H1 indicates a distance from the face of the battery cell 2 having the electrode terminals 211 and the pressure relief mechanism 212 to the main body portion 131 in the first direction X. The first distance H1 satisfies 2 mm < H1 < 30 mm. Preferably, the first distance H1 satisfies 5 mm ≤ H1 ≤ 20 mm. Within this value range, the battery 100 can be guaranteed to have a suitable volume, so that the battery 100 has a good discharge performance.

The ratio H1/M of the first distance H1 to the weight M of a single battery cell 2 can indicate the energy density and the structural strength of the battery 100. When the ratio of the first distance H1 to the weight M of a single battery cell 2 is too large, the energy density of the battery 100 will be too low accordingly. When the ratio of the first distance H1 to the weight M of a single battery cell 2 is too small, the structural strength of the battery 100 will be insufficient accordingly, and a safety accident may occur in a collision. Therefore, H1/M satisfies 0.2 mm/Kg < H1/M < 50 mm/Kg. Optionally, H1/M satisfies 0.5 mm/Kg ≤ H1/M ≤ 20 mm/Kg. Within this value range, the battery 100 has a good energy density and an appropriate structural strength.

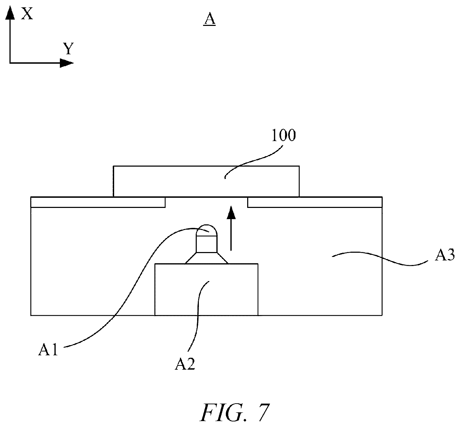

FIG. 7 is a schematic structural view of a collision test device A for performing a collision test on a battery 100 according to some embodiments of the present application. To verify that a battery 100 having the ratio H1/M of the first distance H1 to the weight M of a single battery cell 2 within an appropriate range has a good performance, illustratively, a collision test is performed on the battery 100 by a collision test device A. As shown in FIG. 7, the collision test device A includes an impact head A1, a launching device A2 and a rack A3. During the test, the battery 100 is placed on the rack A3, such that the impact head A1 is driven by the launching device A2, and impacts on the battery 100 at a certain speed. Test conditions may be selected as follows: an impact direction is the first direction X, an impact position is a weak point of the battery 100, and an impact energy is 90J.

Since the battery 100 is applied to a power consuming device such as a vehicle 1000, the top 101 is mounted to the vehicle 1000, and the bottom 102 of the battery 100 is impacted in the first direction X, so that the scene after the battery 100 is mounted to the vehicle 1000 can be simulated. The weak point of the battery 100 indicates a vulnerable position of the battery 100, which is usually within a radius of 240 mm from the geometric center of the battery 100, and impacting the weak point of the battery 100 which can simulate the state of the battery 100 after the position of the battery 100 that has a weak structural strength is impacted. The impact energy of 90J can be equivalent to the impact head A1 impacting the battery 100 at a speed of 4.2 m/s. It can be understood that another impact energy can also be used to impact the battery 100, for example, 120J (at an impact speed 4.9 m/s) or 150J (at an impact speed 5.5 m/s). During the actual experiment, the battery 100 may be impacted multiple times with one impact energy, or the battery 100 may be impacted multiple times with multiple impact energies.

After the battery 100 is impacted by the collision test device A, it is observed at the ambient temperature for 2 hours to detect whether the battery 100 catches fire or explodes. Optionally, after the battery 100 is subjected to a collision test with the collision test device A, the battery 100 may also be tested for the enclosure protection level, which will not be limited in the embodiments of the present application.

Table 1 shows the test results of the collision test on the battery 100 by using the above method when the first distance H1, the weight M of a single battery cell 2 and the value of H1/M are respectively different.

**Table 1**

| | H1 (mm) | M (Kg) | H1/M (mm/Kg) | Collision test |
|---|---|---|---|---|
| Example 1 | 5 | 10 | 0.5 | No fire, no explosion |
| Example 2 | 10 | 5 | 2 | No fire, no explosion |
| Example 3 | 15 | 3 | 5 | No fire, no explosion |
| Example 4 | 20 | 2 | 10 | No fire, no explosion |
| Example 5 | 25 | 1 | 25 | No fire, no explosion |
| Comparative Example 1 | 2 | 10 | 0.2 | Fire, explosion |
| Comparative Example 2 | 30 | 1 | 30 | Fire, explosion |
| Comparative Example 3 | 25 | 0.5 | 50 | Fire, explosion |

As shown in Table 1, when the first distance H1 satisfies 2 mm < H1 < 30 mm, and H1/M satisfies 0.2 mm/Kg < H1/M < 50 mm/Kg, the battery 100 will not catch fire or explode in a collision test of a certain intensity, and thus has a better safety.

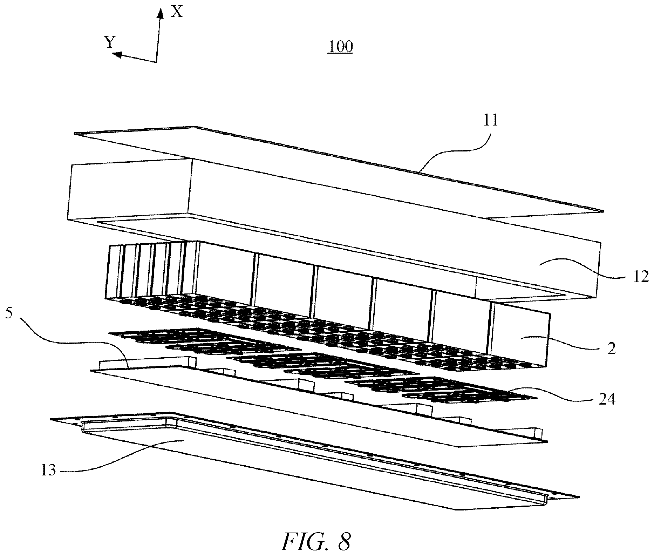

FIG. 8 is a schematic exploded view of a battery 100 according to some other embodiments of the present application. In FIG. 8, the structures of the connection plate 3 and the connector 4 are omitted. As shown in FIG. 8, in some other optional embodiments, the battery 100 further includes a carrying assembly 5. The carrying assembly 5 is arranged between the battery cell 2 and the cover body 13 to support and carry the battery cell 2.

The battery cell 2 is fixedly connected to the support plate 11 of the case 1, and the carrying assembly 5 is fixedly connected to the battery cell 2, so that it is possible to provide a multi-side fixing function to the structure of the battery 100 and improve the stability of the battery 100.

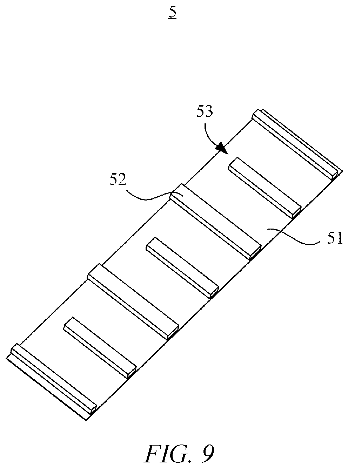

FIG. 9 is a schematic structural view of a carrying assembly 5 of a battery 100 according to yet some other embodiments of the present application; As shown in FIG. 9, the carrying assembly 5 includes a main plate 51 and carrying strips 52. The carrying strips 52 protrude from the main plate 51 to the battery cell 2 in the first direction X, and a plurality of carrying strips 52 are fixedly connected between adjacent battery cells 2. That is, in the case 1, one battery cell 2 may be provided, or a plurality of battery cells 2 may be provided. Where a plurality of battery cells 2 are provided in the case 1, when the plurality of battery cells 2 are arranged in the case 1, the carrying strip 52 needs to be fixed to the connection of adjacent battery cells 2 and avoid contact with the electrode terminals 211 so as to support the battery cells 2. In the embodiments of the present application, the carrying strips 52 are formed as bumps arranged at intervals in the second direction Y, and protrude upward from the main plate 51 in the first direction X. Since the electrode terminals 211 of the battery cell 2 are arranged on two sides of the pressure relief mechanism 212, the carrying strip 52 is fixedly connected between the electrode terminals 211 of adjacent battery cells 2.

In some optional embodiments, the battery cell 2 includes a bus component 24, and the plurality of battery cells 2 are electrically connected to each other via the bus component 24. In the embodiments of the present application, the bus component 24 bridges adjacent electrode terminals 211, and the carrying strip 52 arranged between the adjacent electrode terminals 211 needs to avoid the bus component 24. Therefore, the carrying strip 52 includes a notch 521 for avoiding the bus component 24. In the embodiments of the present application, the notch 521 is provided at one end of the carrying strip 52, or the notch 521 may have other arrangement positions, depending on the arrangement of the bus component 24. The foregoing power consuming devices are not specifically limited in the embodiments of the present application.

Optionally, in order to avoid affecting the electrical connection between the battery cells 2, the carrying assembly 5 is an insulating member. It can be understood that, the carrying assembly 5 may be made of an insulating material as a whole, or may be an object whose surface is coated with an insulating material so as to exhibit insulation properties as a whole. When the carrying assembly 5 is an object whose surface is covered with an insulating material, a core material may be a metal material, an insulating material, a composite material, etc., and an outer surface of the core material is covered with the insulating material. In addition, the carrying assembly 5 should have a certain hardness and elasticity so as to provide a supporting effect on the battery cells 2, and can also produce a certain amount of deformation when impacted, so as to protect the battery cells 2.

Optionally, the carrying strips 52 and the main plate 51 may be integrally formed with each other, or may be detachably connected to each other, which will not be limited in the embodiments of the present application.

Optionally, the main plate 51 may be fixedly connected to the main body portion 131, or may abut against the main body portion 131, which will not be limited in the embodiments of the present application.

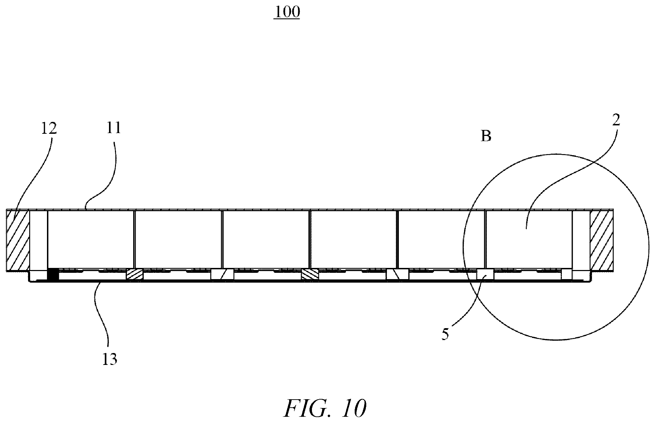

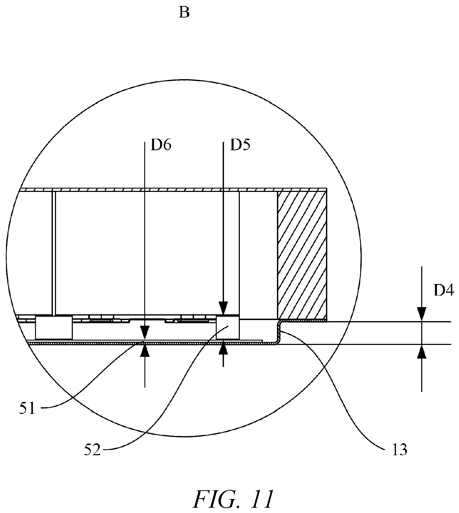

FIG. 10 is a schematic cross-sectional view of the battery shown in FIG. 8. FIG. 11 is a schematic enlarged view of FIG. 10 at circle B. As shown in FIGS. 10 and 11, in the first direction X, a thickness of the carrying strip 52 is a fifth dimension D5.

Since the main body portion 131 of the cover body 13 protrudes from the extension plane of the bottom 102 relative to the matching portion 132, the distance between the main body portion 131 and the matching portion 132 in the first direction X is a fourth dimension D4. The carrying assembly 5 is arranged between the battery cell 2 and the cover body 13, the main plate 51 may have a shape matching the main body portion 131, and the dimension of the main plate 51 in the first direction X is a sixth dimension D6.

In order to make the battery 100 have an appropriate energy density and structural strength, the sum of the fifth dimension D5 and the sixth dimension D6 should not be less than the fourth dimension D4, that is, satisfying D5 + D6 ≥ D4. That is, in the first direction X, the overall size of the carrying assembly 5 should be greater than the distance difference between the main body portion 131 and the matching portion 132, so that the carrying assembly 5 is fixed to the battery cell 2, the battery cell 2 is kept at a distance from the main body portion 131 of the cover body 13, and when the pressure relief mechanism 212 and the electrode terminals 211 jointly face the cover body 13, an enough eruption space is reserved for the pressure relief mechanism 212.

The fifth dimension D5 satisfies 0.5 mm ≤ D5 ≤ 30 mm, and a ratio D5/M of the fifth dimension D5 to the weight M of a single battery cell 2 can indicate the energy density and the structural strength of the battery 100. When the ratio of the fifth dimension D5 to the weight M of a single battery cell 2 is too large, the energy density of the battery 100 will be too low accordingly. When the ratio of the fifth dimension D5 to the weight M of a single battery cell 2 is too small, the structural strength of the battery 100 will be insufficient accordingly, and a safety accident may occur in a collision. Therefore, the ratio D5/M of the fifth dimension D5 to the weight M of a single battery cell 2 satisfies 0.05 mm/Kg ≤ D5/M ≤ 50 mm/Kg. Within this value range, the battery 100 has a good energy density and an appropriate structural strength.

To verify that a battery 100 having the ratio D5/M of the fifth dimension D5 to the weight M of a single battery cell 2 within an appropriate range has a good performance, a structural strength test may performed on the battery 100. During the structural strength test of the battery 100, illustratively, the structural strength of the battery 100 may be determined through a plurality of tests such as a shear strength test and a compressive strength test.

In the shear strength test, illustratively, the battery 100 may be fixed between clamps of a shear tester, then a detection head of the shear tester is used to drive the side plates 12 of the battery 100 to move in the second direction Y at a speed of 5 mm/min, and a pulling force F exerted by the detection head is recorded when the side plates 12 are separated from the support plate 11 and the cover body 13. Taking a projection area of the battery 100 in the first direction X as an area A, the value of F/A is the shear strength that the battery 100 can withstand.

In the compressive strength test, illustratively, a pressing head may be used to apply pressure to the battery 100 in the first direction X and in the second direction Y, advances toward the battery 100 at a speed of 2 m/s, and is stopped for 10 minutes after a pressing force reaches 50 KN or the deformation of the battery 100 reaches 30%, and the battery 100 is left standing and observed at the ambient temperature for 2 hours after the compressive strength test.

Optionally, the structural strength of the battery 100 may be tested through other structural strength tests, which will not be limited in the embodiments of the present application.

Table 2 shows the test results of the structural strength of the battery 100 by using the above method when the fifth dimension D5, the weight M of a single battery cell 2 and the value of D5/M are respectively different.

**Table 2**

| | D5 (mm) | M (Kg) | D5/M (mm/Kg) | Structural strength test |
|---|---|---|---|---|
| Example 6 | 0.5 | 10 | 0.05 | Fair |
| Example 7 | 5 | 5 | 1 | Fair |
| Example 8 | 10 | 4 | 2.5 | Good |
| Example 9 | 10 | 2 | 5 | Good |
| Example 10 | 20 | 1 | 20 | Excellent |
| Example 11 | 30 | 0.6 | 50 | Fair |
| Comparative Example 5 | 0.2 | 5 | 0.04 | Poor |
| Comparative Example 6 | 52 | 1 | 52 | Poor |

As shown in Table 2, when D5 satisfies 0.5 mm ≤ D5 ≤ 30 mm, and D5/M satisfies 0.05 mm/Kg ≤ D5/M ≤ 50 mm/Kg, the battery 100 has a better structural strength in the structural strength test.

In other optional embodiments, the battery 100 further includes a carrying assembly 5. However, the carrying assembly 5 abuts against the battery cell 2. Similar to the above embodiments, the carrying assembly 5 includes a main plate 51 and carrying strips 52. The thickness of the carrying strip 52 is a fifth dimension D5.

In this case, the fifth dimension D5 satisfies 5 mm ≤ D5 ≤ 30 mm. Therefore, the ratio D5/M of the fifth dimension D5 to the weight M of a single battery cell 2 satisfies 0.5 mm/Kg ≤ D5/M ≤ 50 mm/Kg. Preferably, D5/M satisfies 1 mm/Kg ≤ D5/M ≤ 30 mm/Kg. Within this value range, the battery 100 has a good energy density and an appropriate structural strength.

Table 3 shows the test results of the collision test on the battery 100 by using the above collision test method when the fifth dimension D5, the weight M of a single battery cell 2 and the value of D5/M are respectively different, with the carrying assembly 5 abutting against the battery cell 2.

**Table 3**

| No. | D5 (mm) | M (Kg) | D5/M (mm/Kg) | Collision test |
|---|---|---|---|---|
| Example 12 | 5 | 10 | 0.5 | No fire, no explosion |
| Example 13 | 10 | 5 | 2 | No fire, no explosion |
| Example 14 | 15 | 3 | 5 | No fire, no explosion |
| Example 15 | 30 | 1 | 30 | No fire, no explosion |
| Example 16 | 25 | 0.5 | 50 | No fire, no explosion |
| Comparative Example 7 | 3 | 5 | 0.2 | Fire, explosion |
| Comparative Example 8 | 52 | 1 | 52 | Fire, explosion |

As shown in Table 3, when D5 satisfies 5 mm ≤ D5 ≤ 30 mm, and D5/M satisfies 0.5 mm/Kg ≤ D5/M ≤ 50 mm/Kg, the battery 100 will not catch fire or explode in a collision test of a certain intensity, and thus has a better safety.

It should be understood that the above descriptions of some embodiments of the battery 100 are only illustrative, and the battery 100 may also have other structures.

In some optional embodiments, the case 1 may be a simple three-dimensional structure such as a cuboid or a cylinder, or a complex three-dimensional structure composed of simple three-dimensional structures such as a cuboid or a cylinder. The material of the case 1 may be an alloy material such as an aluminum alloy and an iron alloy, or may be a polymer material such as polycarbonate and polyisocyanurate foam, or may be a composite material such as a combination of glass fiber and epoxy resin. In order to improve the sealing performance of the case 1, a sealing member, such as a sealant and a sealing ring, may also be provided between the cover body 13 and the side plates 12. The above feasible configurations are not limited in the embodiments of the present application.

In some other optional embodiments, in the battery 100, there may be a plurality of battery cells 2, and the plurality of battery cells 2 may be connected in series or in parallel or in series-parallel. The series-parallel connection means that some of the plurality of battery cells 2 are connected in series and some are connected in parallel. The plurality of battery cells 2 may be directly connected to each other in series or in parallel or in series-parallel, and then the plurality of battery cells 2 as a whole are received in the case 1. Of course, the battery 100 may also be a unit received in the case 1 that is formed by firstly connecting a plurality of battery cells 2 in series or in parallel or in series-parallel to form a plurality of battery modules, and then connecting the plurality of battery modules in series or in parallel or in series-parallel.

Each battery cell 2 may be a secondary battery or a primary battery; or may be a lithium-sulfur battery, a sodium-ion battery, or a magnesium-ion battery, but is not limited thereto. The battery cell 2 may be in the shape of a cylinder, a flat body, a cuboid, etc.

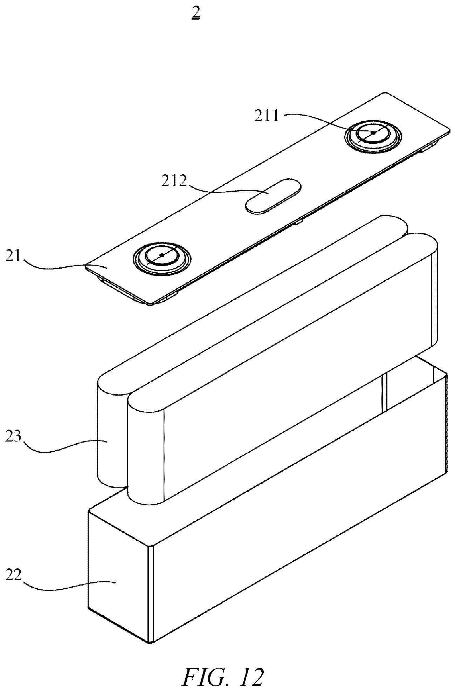

FIG. 12 is a schematic structural view of a battery cell 2 according to some embodiments of the present application. The battery cell 2 refers to the smallest unit of the battery 100. As shown in FIG. 12, the battery cell 2 further includes an end cap 21, a housing 22, an electrode assembly 23 and other functional components.

The end cap 21 refers to a component that covers an opening of the housing 22 to isolate the internal environment of the battery cell 2 from the external environment. Without limitation, the shape of the end cap 21 may be adapted to the shape of the housing 22 to match the housing 22. Optionally, the end cap 21 may be made of a material (e.g., an aluminum alloy) with a certain hardness and strength. In this way, the end cap 21 is less prone to deformation when subjected to compression and collision, so that the battery cell 2 may have a higher structural strength and the safety performance can also be improved. The end cap 21 is provided with functional components such as electrode terminals 211 and a pressure relief mechanism 212. The electrode terminals 211 may be used for electrical connection with the electrode assembly 23 for outputting or inputting electric energy of the battery cell 2. In some embodiments, the end cap 21 may also be provided with a pressure relief mechanism for releasing the internal pressure when the internal pressure or temperature of the battery cell 2 reaches a threshold value. The end cap 21 may also be made of various materials, such as copper, iron, aluminum, stainless steel, an aluminum alloy, plastic, etc., which will not be specially limited in the embodiments of the present application. In some embodiments, an insulating member may also be provided on an inner side of the end cap 21, and the insulating member may be used to isolate an electrical connection plate in the housing 22 from the end cap 21 to reduce the risk of short circuit. Illustratively, the insulating member may be made of plastic, rubber, etc.

The housing 22 is an assembly for matching the end cap 21 to form the internal environment of the battery cell 2. The formed internal environment may be used to receive the electrode assembly, an electrolyte solution (not shown in the figures) and other components. The housing 22 and the end cap 21 may be separate components, the housing 22 may be provided with an opening, and the internal environment of the battery cell 2 is formed by making the end cap 21 cover the opening at the opening. Without limitation, the end cap 21 and the housing 22 may also be integrated with each other. Specifically, the end cap 21 and the housing 22 may form a common connection face before other components are inserted into the housing. When the interior of the housing 22 needs to be packaged, the end cap 21 then covers the housing 22. The housing 22 may have various shapes and various sizes, for example, in the form of a cuboid, a cylinder, a hexagonal prism, etc. Specifically, the shape of the housing 22 may be determined depending on the specific shape and size of the electrode assembly 23. The housing 22 may be made of various materials, such as copper, iron, aluminum, stainless steel, an aluminum alloy, plastic, etc., which is not particularly limited in the embodiments of the present application.

The electrode assembly 23 is a component where an electrochemical reaction occurs in the battery cell 100. The housing 22 may include one or more electrode assemblies 23 therein. The electrode assembly 23 is mainly formed by winding or stacking a positive electrode plate and a negative electrode plate, and a separator is generally arranged between the positive electrode plate and the negative electrode plate. The portions of the positive electrode plate and the negative electrode plate that have an active material constitute a main body portion of the electrode assembly, and the portions of the positive electrode plate and the negative electrode plate that have no active material each constitute a tab. A positive battery tab and the negative battery tab may be located at one end of the main body portion together or at two ends of the main body portion respectively. During the charging and discharging of the battery, a positive active material and a negative active material react with the electrolyte solution, and the tabs are connected to the electrode terminals to form a current loop.

In some optional embodiments of the present application, the battery 100 includes a case 1, a battery cell 2, a connection plate 3 and a connector 4. The case 1 has a top 101 and a bottom 102 opposite to each other in a first direction X, and the bottom 102 is provided with an opening 103. The battery cell 2 is arranged in the case 1. The connection plate 3 is configured to protrude in a second direction Y from one side of the case 1, and to form a receiving portion 31 with the bottom 102 in the first direction X. The connector 4 is arranged in the receiving portion 31 and connected to the connection plate 3, and the connector 4 is electrically connected to the battery cell 2. The first direction X intersects the second direction Y. Referring to FIG. 4, the connector 4 does not extend beyond an extension plane of the bottom 102 in the first direction X. Referring to FIG. 3, the case 1 includes a support plate 11 arranged at the top 101, the battery cell 2 is connected to the support plate 11, and electrode terminals 211 are arranged to face the opening 103.

In some cases, for the battery 100 according to the embodiments of the present application, the battery cell 2 is arranged at the top 101 of the case 1 and the electrode terminals 211 face the opening 103, so that the rigidity of the top 101 of the case 1 and the energy density of the battery 100 can be increased. In addition, the connection plate 3 and the bottom 102 of the case 1 form the receiving portion 31 in the first direction X, and the connector 4 is arranged in the receiving portion 31, so that it is possible to protect the connector 4 and reduce the probability of damage to the connector 4 in a collision.

It should be noted that the embodiments in the present application and features in the embodiments may be combined with each other without conflicts.

Finally, it should be noted that the foregoing embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

## Claims

1. A battery, comprising:
a case (1) having a top (101) and a bottom (102) opposite to each other in a first direction, the bottom (102) being provided with an opening (103);
a battery cell (2) arranged in the case (1);
a connection plate (3) configured to protrude in a second direction from one side of the case (1), and to form a receiving portion (31) with the bottom (102) in the first direction, the first direction intersecting the second direction; and
a connector (4) arranged in the receiving portion (31) and connected to the connection plate (3), the connector (4) being electrically connected to the battery cell (2).

2. The battery according to claim 1, wherein the connector (4) does not extend beyond an extension plane of the bottom (102) in the first direction.

3. The battery according to claim 2, wherein the case (1) comprises side plates (12) distributed along a periphery of the opening (103), the side plates (12) are connected to each other to form a frame structure, and the connection plate (3) is integrally formed with the side plates (12).

4. The battery according to claim 3, wherein a surface of the connection plate (3) facing the receiving portion (31) is a first protective surface (311), a surface of the side plate (12) facing the receiving portion (31) is a second protective surface (312), and the connector (4) is connected to the first protective surface (311), and is arranged spaced apart from the second protective surface (312).

5. The battery according to claim 3, wherein in the first direction, a thickness D1 of the connection plate (3), an extension height D2 of the connector (4) and an extension height D3 of the side plate (12) satisfy: D1 + D2 ≤ D3.

6. The battery according to any one of claims 3-5, wherein the case (1) further comprises a cover body (13) arranged at the opening (103), and the cover body (13) is fixedly connected to the side plates (12).

7. The battery according to claim 6, wherein the cover body (13) is detachably connected to the side plates (12).

8. The battery according to any one of claims 1-3, wherein the case (1) comprises a support plate (11) arranged at the top (101), and the battery cell (2) is connected to the support plate (11).

9. The battery according to claim 8, wherein a side surface of the connection plate (3) facing away from the receiving portion (31) is located on the same horizontal plane as a side surface of the support plate (11) facing away from the opening (103).

10. The battery according to claim 8, wherein the support plate (11) is internally provided with a channel configured to receive a heat exchange medium to adjust the temperature of the battery cell.

11. The battery according to claim 8, wherein a thermal management component is further provided between the battery cell (2) and the support plate (11), and the thermal management component is configured to adjust the temperature of the battery cell.

12. The battery according to claim 8, wherein electrode terminals of the battery cell are arranged to face the opening, and an end face of the battery cell opposite to the electrode terminals is fixed to the support plate.

13. The battery according to claim 12, wherein a pressure relief mechanism and the electrode terminals (211) of the battery cell (2) are jointly arranged to face the opening (103).

14. The battery according to claim 6, further comprising a carrying assembly (5), wherein the carrying assembly (5) is arranged between the battery cell (2) and the cover body (13) to support and carry the battery cell (2).

15. A power consuming device, comprising a battery according to any one of claims 1-14, the battery being configured to supply electric energy.
